# EUROPÄISCHE PATENTSCHRIFT

(11) **EP 4 124 064 B1**
(45) Veröffentlichungstag und Bekanntmachung des Hinweises auf die Patenterteilung: **29.11.2023**
(21) Anmeldenummer: 22184271.9
(22) Anmeldetag: 12.07.2022
(51) Int. Cl.: H04R 1/40, H04R 3/00, G10K 11/34, G01S 3/80, G01S 3/86, G01S 7/527, G01S 7/536, H04R 25/00

(54) **VERFAHREN UND VORRICHTUNG ZUM ADAPTIVEN BEAMFORMING**
ADAPTIVE BEAMFORMING METHOD AND APPARATUS
PROCÉDÉ ET DISPOSITIF DE FORMATION ADAPTATIVE DE FAISCEAU

(30) Priorität: 16.07.2021 DE 102021118403
(43) Veröffentlichungstag der Anmeldung: 25.01.2023
(73) Patentinhaber: ELAC SONAR GmbH, 24118 Kiel (DE)
(72) Erfinder: von Hoyningen-Huene, Johannes, 24118 Kiel (DE); Kaak, Thorben, 24118 Kiel (DE)
(74) Vertreter: Lobemeier, Martin Landolf

(56) Entgegenhaltungen:
- WO-A2-2007/004188
- GB-A- 2 517 823
- US-B1- 10 237 647
- MORGERA S D ET AL: "Source-oriented adaptive beamforming", CIRCUITS, SYSTEMS AND SIGNAL PROCESSING, CAMBRIDGE, MS, US, Bd. 2, Nr. 4, 1. Januar 1983 (1983-01-01), Seiten 487-516, XP008108350, ISSN: 0278-081X

## Beschreibung

Die Erfindung betrifft ein Verfahren zum adaptiven Beamforming wenigstens eines mittels eines aus einer Mehrzahl von Empfängern gebildeten Arrays bei einer vorbestimmten Samplingrate und einer vorbestimmten Blockgröße erfassten akustischen Signals unter Anwendung sich gemäß einer vorbestimmten Adaptionsrate aktualisierender adaptiver Filterkoeffizienten.

Als Beamforming wird allgemein die Ausbildung der Richtcharakteristik eines "Beams", also eines Signalstreufelds einer Anordnung aus mehreren Empfängern, eines sogenannten Arrays, verstanden. Beamforming, oder auch Richtungsbildung genannt, betrifft demnach die Veränderung der Bewertung der einzelnen Sensorsignale, um die Hauptkeule des Sensorsignalfelds in eine andere Richtung zu steuern, ohne die Sensorik selbst räumlich neu auszurichten.

Adaptives Beamforming wird eingesetzt, um die Einwirkung von deterministischen Störsignalen außerhalb der vorrangigen Richtung auf das Ausgangssignal eines Beams adaptiv zu minimieren. Dazu werden Nullstellen in der Beamformercharakteristik in die Richtung der Störsignale verschoben. Adaptionsziel ist es die Leistung außerhalb der vorrangigen Detektionsrichtung zu minimieren. Je mehr Signaldaten zur Berechnung der adaptierten Koeffizienten verwendet werden, desto besser ist die Unterdrückung des Übersprechens von Störsignalen. Gleichzeitig ist die Rechenlast des adaptiven Beamformers sehr hoch und erfordert sehr performante Rechner und Leistung.

Bei einer Realisierung des Beamforming im Frequenzbereich werden fortlaufend Blöcke der Abtastwerte eines Signals mittels FFT vom Zeitbereich in den Frequenzbereich transformiert und dort verarbeitet. Die Größe der FFT-Blöcke und damit auch deren Rate ist meist durch Signal- und Arrayeigenschaften vorgegeben. Beispielsweise ergibt sich bei einer Samplingrate von 20480 Hz und einer Blockgröße von 512 Byte eine FFT-Rate von 40 Hz. Üblicherweise werden im Beamformer eine Vielzahl von Empfangsrichtungen, den sogenannten Beams parallel ausgewertet. Zusammen mit der durch die FFT beschriebenen Frequenzachse ergibt sich ein zweidimensionales sogenanntes Panorama, im Folgenden auch Empfangspanorama genannt, beschrieben durch die Menge der Beamwinkel und der Frequenzen.

Die FFT-Rate *f*_{FFT} stellt auch die maximale Rate dar, mit der ein adaptiver Beamformer neue Koeffizientensätze erzeugt. In der Praxis ändert sich die Umgebung allerdings nicht so schnell, so dass die Adaptionsrate *f*_{adapt} zugunsten einer geringeren Rechenlast bei der Koeffizientenadaption langsamer gewählt werden kann, beispielsweise 10 Hz.

Wenngleich die Anwendung einer Adaptionsrate, die geringer als die FFT-Rate ist, die Rechenlast zu verringern vermag, ist diese bei den derzeit verfügbaren, hochspezialisierten Systemen weiterhin sehr hoch. Außerdem kann die Qualität der Signalverarbeitung in einigen Fällen leiden, sodass es Aufgabe der Erfindung ist, ein Verfahren zum adaptiven Beamforming zu schaffen, dessen numerischer Aufwand bei bestmöglicher Performance minimal ist. Lösungen im Stand der Technik sind aus den Dokumenten US 10 237 647, GB 2 517 823 und WO 2007/004188 bekannt.

Diese Aufgabe wird erfindungsgemäß durch das Verfahren zum adaptiven Beamformen mit den Merkmalen von Anspruch 1 und die Vorrichtung gemäß Anspruch 7 gelöst. Die Unteransprüche geben jeweils vorteilhafte Ausgestaltungen der Erfindung wieder.

Die Erfindung beruht auf der Beobachtung, dass die Adaptionsrate der Filterkoeffizienten quasi als "Stellschraube" dienen kann, um Rechenaufwand und Qualität der Koeffizientenadaption einzustellen. Üblicherweise ist die Adaptionsrate für den gesamten Beamformer, also alle Beams und Frequenzkanäle, identisch. Die vorliegende Erfindung ermöglicht nun, die Koeffizientenadaption in besonders interessanten Zielbereichen (Winkel und oder Frequenz) mit möglichst hoher Performance durchzuführen, während in aktuell weniger interessanten Bereichen die Adaption der Koeffizienten resourcenschonender und gleichzeitig auch stabiler durchgeführt werden kann.

Das grundlegende Prinzip der Erfindung besteht darin, dass die Adaption der Koeffizienten nicht für alle Beams und Frequenzen gleichartig gestaltet ist, sondern in Abhängigkeit von der aktuell empfangenen Leistungs- und oder Frequenzverteilung. Je näher ein Paar aus Beam und Frequenz zu detektierten Signalen mit signifikanter Leistung liegt, desto häufiger und damit rechenintensiver erfolgt die Koeffizientenadaption. Dagegen können Koeffizienten, die in Beam und Frequenz um eine definierte Entfernung von den signifikanten Zielen entfernt liegen, langsamer adaptiert werden bzw. sogar komplett deterministisch bestimmt werden. Mit anderen Worten wird eine hohe Adaptionsrate auf die Datenströme derjenigen Empfänger angewendet, die ein eine vorbestimmte Signalleistung übersteigendes Signal und/oder ein Signal mit einer vorbestimmten Frequenz oder einem vorbestimmten Frequenzbereich erfassen, wohingegen die Datenströme derjenigen Empfänger, die diese Kriterien nicht erfüllen, bei einer niedrigeren Adaptionsrate verarbeitet werden.

Der Wechsel von adaptiver Bestimmung der Koeffizienten zu rein deterministisch festgelegten muss hierbei nicht sprunghaft geschehen, sondern kann über eine gewisse räumliche Ausdehnung erfolgen. Die Wahl dieser Ausdehnung bestimmt das Maß einer Hemmung von ungewünschten Transienten-Effekten.

Ebenfalls ist es vorgesehen, diesen kontinuierlichen Wechsel von adaptiven zu deterministischen Koeffizienten nicht nur räumlich, sondern auch zeitlich zu betrachten. Der adaptive Anteil des Beamformers sinkt somit, abhängig von einer festgelegten Umformungsgeschwindigkeit mit ansteigender Zeit zum letzten Koeffizientenupdate, während der deterministische Anteil ansteigt. Durch dieses Vorgehen kann die Robustheit des Beamformers in Bereichen, dessen adaptive Koeffizienten weniger häufig bestimmt werden, erhöht werden.

Erfindungsgemäß wird also ein Verfahren zum adaptiven Beamforming wenigstens eines mittels eines aus einer Mehrzahl von Empfängern gebildeten Arrays bei einer vorbestimmten Samplingrate und einer vorbestimmten Blockgröße erfassten akustischen Signals unter Anwendung sich gemäß einer vorbestimmten Adaptionsrate aktualisierender adaptiver Filterkoeffizienten vorgeschlagen, bei dem die Adaptionsrate eines jeden Empfängers von der Leistung des vom jeweiligen Empfänger erfassten Signals abhängig ist und das die Schritte: Bestimmen der mittleren Signalleistung des Empfangspanoramas der von den Empfängern des Arrays empfangenen Signale, und Anwenden einer vorbestimmten Adaptionsrate auf diejenigen Teilbereiche des Empfangspanoramas, deren erfasstes Signal eine Signalleistung entsprechend der mittleren Signalleistung oder größer aufweist, wobei die vorbestimmte Adaptionsrate eine höhere Frequenz aufweist als die Adaptionsrate derjenigen Teilbereiche des Empfangspanoramas, deren erfasstes Signal eine niedrigere Signalleistung als die mittlere Signalleistung aufweist.

Insbesondere weist die Adaptionsrate derjenigen Empfänger bzw. Teilbereiche des Empfangspanoramas, deren erfasstes Signal eine vorbestimmte Signalleistung übersteigt, eine gegenüber denjenigen Empfänger bzw. Teilbereiche des Empfangspanoramas, deren erfasstes Signal eine unterhalb der vorbestimmten Signalleistung liegende Leistung aufweist, eine höhere Frequenz auf.

Alternativ oder zusätzlich weist die Adaptionsrate derjenigen Empfänger bzw. Teilbereiche des Empfangspanoramas, deren erfasstes Signal eine vorbestimmte Frequenz oder einen vorbestimmten Frequenzbereich aufweist, gegenüber denjenigen Empfänger bzw. Teilbereiche des Empfangspanoramas, deren erfasstes Signal die vorbestimmte Frequenz oder den vorbestimmten Frequenzbereich nicht aufweist, eine höhere Frequenz auf.

Speziell ist vorgesehen, dass die Frequenz der Adaptionsrate maximal der Frequenz der FFT-Rate entspricht, wobei die Frequenz der FFT-Rate besonders bevorzugt ein ganzzahliges Vielfaches der Adaptionsrate beträgt. In dem eingangs genannten Beispiel beträgt die FFT-Rate 40 Hz und die Adaptionsrate derjenigen Empfänger, deren Signalleistung oder Frequenz höher als die vorbestimmte Signalleistung oder die vorbestimmte Frequenz ist, 10 Hz, wobei die übrigen Empfänger eine Adaptionsratenfrequenz von beispielsweise 5 Hz oder 1 Hz aufweisen.

Bevorzugt ist dabei vorgesehen, dass die Adaptionsrate derjenigen Empfänger bzw. Teilbereiche des Empfangspanoramas, deren erfasstes Signal eine niedrigere Signalleistung als die vorbestimmte Signalleistung aufweist oder die vorbestimmte Frequenz oder den vorbestimmten Frequenzbereich nicht aufweist und die zu einem Empfänger bzw. Teilbereich des Empfangspanoramas mit höherer Adaptionsrate in einem vorbestimmten Abstand benachbart angeordnet sind, niedriger als die Adaptionsrate der Empfänger bzw. Teilbereiche des Empfangspanoramas mit höherer Adaptionsrate und höher als die Adaptionsrate der übrigen Empfänger bzw. Teilbereiche des Empfangspanoramas ist. So können räumliche Abschnitte im Empfangspanoramas gebildet werden, deren Signale mit sich gemäß einer unterschiedlichen Adaptionsrate aktualisierenden Filterkoeffizienten bearbeitet werden, sodass ungewünschte Transienten-Effekte unterdrückt werden können. Beispielsweise könnte die Adaptionsrate in einem räumlichen Bereich des Panoramas mit hoher Signalleistung 10 Hz betragen, wobei ein benachbarter Bereich, der eine Signalleistung innerhalb eines vorbestimmten Leistungsbereichs unterhalb der vorbestimmten Signalleistung aufweist, eine Adaptionsrate von 5 Hz aufweist und alle übrigen Bereiche unterhalb des vorbestimmten Leistungsbereichs schließlich eine Adaptionsrate von nur 1 Hz aufweisen.

Das Verfahren wird bevorzugt in einem sachlichen Zusammenhang ausgeführt, in dem die Empfänger als Hydrophone eines Sonars ausgebildet sind.

Ebenso wird eine Vorrichtung vorgeschlagen mit einem aus einer Mehrzahl von Empfängern gebildeten Array, wobei die Empfänger bei einer vorbestimmten Samplingrate und einer vorbestimmten Blockgröße zum Erfassen eines akustischen Signals eingerichtet sind, und einer Einrichtung zum adaptiven Beamforming der von den Empfängern empfangenen Signale mittels Anwendung sich gemäß einer vorbestimmten Adaptionsrate aktualisierender adaptiver Filterkoeffizienten, wobei die einem jeden Empfänger zugeordnete Adaptionsrate von der Leistung des vom jeweiligen Empfänger erfassten Signals abhängig ist und die Adaptionsrate derjenigen Empfänger, deren erfasstes Signal eine Signalleistung entsprechend der mittleren Signalleistung der von den Empfängern des Arrays empfangenen Signale oder größer aufweist, eine höhere Frequenz aufweist als die Adaptionsrate derjenigen Empfänger, deren erfasstes Signal eine niedrigere Signalleistung als die mittlere Signalleistung der von den Empfängern des Arrays empfangenen Signale aufweist.

Die Vorrichtung ist bevorzugt so eingerichtet, dass die Adaptionsrate derjenigen Empfänger bzw. Teilbereiche des Empfangspanoramas, deren erfasstes Signal eine vorbestimmte Signalleistung übersteigt, eine gegenüber denjenigen Empfänger bzw. Teilbereiche des Empfangspanoramas, deren erfasstes Signal eine unterhalb der vorbestimmten Signalleistung liegende Leistung aufweist, höhere Frequenz aufweist.

Die Vorrichtung ist weiter bevorzugt so eingerichtet, dass die Adaptionsrate derjenigen Empfänger bzw. Teilbereiche des Empfangspanoramas, deren erfasstes Signal eine vorbestimmte Frequenz oder einen vorbestimmten Frequenzbereich aufweist, gegenüber denjenigen Empfänger bzw. Teilbereiche des Empfangspanoramas, deren erfasstes Signal die vorbestimmte Frequenz oder den vorbestimmten Frequenzbereich nicht aufweist, höhere Frequenz aufweist.

Die Adaptionsrate derjenigen Empfänger bzw. Teilbereiche des Empfangspanoramas der Vorrichtung, deren erfasstes Signal eine niedrigere Signalleistung als die vorbestimmte Signalleistung aufweist oder die vorbestimmte Frequenz oder den vorbestimmten Frequenzbereich nicht aufweist und die zu einem Empfänger bzw. Teilbereich des Empfangspanoramas mit höherer Adaptionsrate in einem vorbestimmten Abstand benachbart angeordnet sind, ist bevorzugt niedriger als die Adaptionsrate der Empfänger bzw. Teilbereiche des Empfangspanoramas mit höherer Adaptionsrate und höher als die Adaptionsrate der übrigen Empfänger bzw. Teilbereiche des Empfangspanoramas ist.

Die Vorrichtung ist höchst bevorzugt ein Sonar, wobei die Empfänger des Arrays Hydrophone sind.

Im Übrigen ist die erfindungsgemäße Vorrichtung zum Ausführen des zuvor genannten Verfahrens eingerichtet und weist hierfür die entsprechenden Merkmale auf.

Die Erfindung wird im Folgenden anhand eines in den beigefügten Zeichnungen dargestellten, besonders bevorzugt ausgestalteten Ausführungsbeispiels näher erläutert. Es zeigen:
- Fig. 1: ein Beispiel eines breitbandigen Beamforming-Leistungspanoramas; und
- Fig. 2: erfindungsgemäß gewählte Adaptionsraten auf der Grundlage des in Fig. 1 dargestellten Beamforming-Leistungspanoramas.

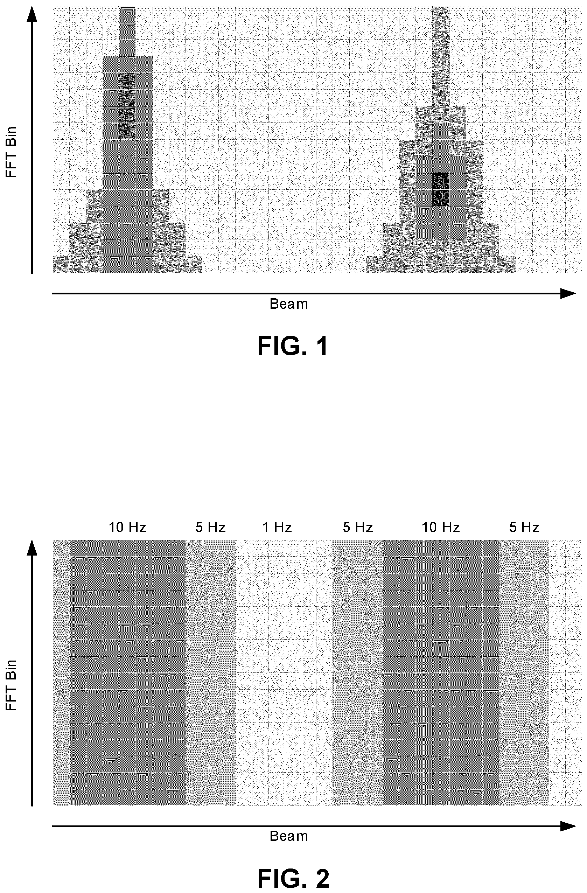

Fig. 1 zeigt ein Beispiel eines breitbandigen Beamforming-Leistungspanoramas, das aus den Eingangssignalen mit aktuell gültigen Filterkoeffizienten berechnet wird. Das Beamforming-Leistungspanorama zeigt Frequenz, Beamrichtung und die empfangene Feldgröße (und damit auch dessen Leistung).

Besonders bevorzugt wird die empfangene Maximalleistung über die Schar an Beamrichtungen und dem Frequenzbereich ermittelt und für jede Kombination aus Beam und FFT-Bin (Frequenzband) ermittelt, welche mittlere Leistung im Bereich in dem Bereich ± Δ_{Beam} und ± Δ_{Bin} empfangen wird.

Abhängig von dem Verhältnis aus regional empfangener Leistung und panoramaweiten Maximalleistung wird für die jeweiligen Empfänger des Arrays eine Adaptionsrate zur Koeffizientenadaption bestimmt - dieses ist in Fig. 2 gezeigt. Dabei wird berücksichtigt, dass die panoramaweit mittlere Adaptionsrate einen bestimmten Wert nicht übersteigt, um z.B. auf gegebener Rechner-Hardware echtzeitfähig zu bleiben und/oder die Leistungsaufnahme sinnvoll zu limitieren. Zusätzlich werden weitere Parameter gewählt, die z.B. die Stabilität der Adaption bei geringem SNR verbessern.

Für alle Koeffizienten, für die nach der aktuellen Adaptionsrate eine Adaption ansteht, werden die entsprechenden Berechnungen durchgeführt und somit basierend auf den aktuellen Eingangssignale (und ggf. alten Koeffizienten) aktualisierte Koeffizienten berechnet. Für die Koeffizienten, die nach der jeweils gültigen Adaptionsrate noch aktuell genug sind, werden die aktuellen Werte für den nächsten Zeitschritt weiterverwendet. Alternativ kann entsprechend einer festgelegten Umformungsgeschwindigkeit der deterministische Anteil der im aktuellen Schritt nicht adaptierten Beamformer-Koeffizienten erhöht werden.

## Patentansprüche

1. Verfahren zum adaptiven Beamforming wenigstens eines mittels eines aus einer Mehrzahl von Empfängern gebildeten Arrays bei einer vorbestimmten Samplingrate und einer vorbestimmten Blockgröße erfassten akustischen Signals unter Anwendung sich gemäß einer vorbestimmten Adaptionsrate aktualisierender adaptiver Filterkoeffizienten, wobei die Adaptionsrate eines jeden Empfängers zumindest von der Leistung des vom jeweiligen Empfänger erfassten Signals abhängig ist mit den Schritten:
- Bestimmen der mittleren Signalleistung des Empfangspanoramas der von den Empfängern des Arrays empfangenen Signale,
- Anwenden einer vorbestimmten Adaptionsrate auf diejenigen Teilbereiche des Empfangspanoramas, deren erfasstes Signal eine Signalleistung entsprechend der mittleren Signalleistung oder größer aufweist, wobei die vorbestimmte Adaptionsrate eine höhere Frequenz aufweist als die Adaptionsrate derjenigen Teilbereiche des Empfangspanoramas, deren erfasstes Signal eine niedrigere Signalleistung als die mittlere Signalleistung aufweist.

2. Verfahren nach Anspruch 1, **dadurch gekennzeichnet, dass** die Adaptionsrate derjenigen Empfänger, deren erfasstes Signal eine niedrigere Signalleistung als eine vorbestimmte Signalleistung aufweist oder eine vorbestimmte Frequenz oder einen vorbestimmten Frequenzbereich nicht aufweist und die zu einem Empfänger mit höherer Adaptionsrate in einem vorbestimmten Abstand benachbart angeordnet sind, niedriger als die Adaptionsrate der Empfänger mit höherer Adaptionsrate und höher als die Adaptionsrate der übrigen Empfänger ist.

3. Verfahren nach einem der vorhergehenden Ansprüche, **dadurch gekennzeichnet, dass** die Adaptionsrate derjenigen Empfänger, deren erfasstes Signal eine vorbestimmte Signalleistung übersteigt, eine gegenüber denjenigen Empfängern, deren erfasstes Signal eine unterhalb der vorbestimmten Signalleistung liegende Leistung aufweist, eine höhere Frequenz aufweist.

4. Verfahren nach einem der vorhergehenden Ansprüche, **dadurch gekennzeichnet, dass** die Adaptionsrate derjenigen Empfänger, deren erfasstes Signal eine vorbestimmte Frequenz oder einen vorbestimmten Frequenzbereich aufweist, gegenüber denjenigen Empfängern, deren erfasstes Signal die vorbestimmte Frequenz oder den vorbestimmten Frequenzbereich nicht aufweist, eine höhere Frequenz aufweist.

5. Verfahren nach einem der vorhergehenden Ansprüche, **dadurch gekennzeichnet, dass** die Adaptionsrate eines Empfängers, dessen erfasstes Signal unterhalb einer weiteren vorbestimmten Signalleistung liegt, deterministisch festgelegt ist.

6. Verfahren nach einem der vorhergehenden Ansprüche, **dadurch gekennzeichnet, dass** die Empfänger als Hydrophone eines Sonars ausgebildet sind.

7. Vorrichtung mit einem aus einer Mehrzahl von Empfängern gebildeten Array, wobei die Empfänger bei einer vorbestimmten Samplingrate und einer vorbestimmten Blockgröße zum Erfassen eines akustischen Signals eingerichtet sind, und einer Einrichtung zum adaptiven Beamforming der von den Empfängern empfangenen Signale mittels Anwendung sich gemäß einer vorbestimmten Adaptionsrate aktualisierender adaptiver Filterkoeffizienten, wobei die einem jeden Empfänger zugeordnete Adaptionsrate zumindest von der Leistung des vom jeweiligen Empfänger erfassten Signals abhängig ist und die Adaptionsrate derjenigen Empfänger, deren erfasstes Signal eine Signalleistung entsprechend der mittleren Signalleistung der von den Empfängern des Arrays empfangenen Signale oder größer aufweist, eine höhere Frequenz aufweist als die Adaptionsrate derjenigen Empfänger, deren erfasstes Signal eine niedrigere Signalleistung als die mittlere Signalleistung der von den Empfängern des Arrays empfangenen Signale aufweist.

8. Vorrichtung nach Anspruch 7, **dadurch gekennzeichnet, dass** die Adaptionsrate derjenigen Empfänger, deren erfasstes Signal eine niedrigere Signalleistung als eine vorbestimmte Signalleistung aufweist oder eine vorbestimmte Frequenz oder einen vorbestimmten Frequenzbereich nicht aufweist und die zu einem Empfänger mit höherer Adaptionsrate in einem vorbestimmten Abstand benachbart angeordnet sind, niedriger als die Adaptionsrate der Empfänger mit höherer Adaptionsrate und höher als die Adaptionsrate der übrigen Empfänger ist.

9. Vorrichtung nach einem der Ansprüche 7 und 8, **dadurch gekennzeichnet, dass** die Adaptionsrate derjenigen Empfänger, deren erfasstes Signal eine vorbestimmte Signalleistung übersteigt, eine gegenüber denjenigen Empfängern, deren erfasstes Signal eine unterhalb der vorbestimmten Signalleistung liegende Leistung aufweist, höhere Frequenz aufweist.

10. Vorrichtung nach einem der Ansprüche 7 und 8, **dadurch gekennzeichnet, dass** die Adaptionsrate derjenigen Empfänger, deren erfasstes Signal eine vorbestimmte Frequenz oder einen vorbestimmten Frequenzbereich aufweist, gegenüber denjenigen Empfängern, deren erfasstes Signal die vorbestimmte Frequenz oder den vorbestimmten Frequenzbereich nicht aufweist, höhere Frequenz aufweist.

11. Vorrichtung nach einem der Ansprüche 7 bis 10, **dadurch gekennzeichnet, dass** die Vorrichtung ein Sonar und die Empfänger Hydrophone sind.

## Claims

1. Method for adaptive beamforming of at least one acoustic signal detected by means of an array formed by a plurality of receivers at a predetermined sampling rate and a predetermined block size, using adaptive filter coefficients which update according to a predetermined adaptation rate, the adaptation rate of each receiver being dependent at least on the power of the signal detected by the respective receiver, comprising the steps of
- determining the mean signal power of the reception panorama of the signals received by the receivers of the array,
- applying a predetermined adaptation rate to those subregions of the reception panorama whose detected signal has a signal power equal to or greater than the average signal power, the predetermined adaptation rate having a higher frequency than the adaptation rate of those subregions of the reception panorama whose detected signal has a signal power lower than the average signal power.

2. Method according to claim 1, **characterized in that** the adaptation rate of those receivers whose detected signal has a lower signal power than a predetermined signal power or does not have a predetermined frequency or a predetermined frequency range and which are arranged adjacent to a receiver having a higher adaptation rate at a predetermined distance is lower than the adaptation rate of the receivers having a higher adaptation rate and higher than the adaptation rate of the remaining receivers.

3. Method according to one of the preceding claims, **characterized in that** the adaptation rate of those receivers whose detected signal exceeds a predetermined signal power has a higher frequency than those receivers whose detected signal has a power below the predetermined signal power.

4. Method according to one of the preceding claims, **characterized in that** the adaptation rate of those receivers whose detected signal has a predetermined frequency or a predetermined frequency range has a higher frequency than those receivers whose detected signal does not have the predetermined frequency or the predetermined frequency range.

5. Method according to one of the preceding claims, **characterized in that** the adaptation rate of a receiver whose detected signal is below a further predetermined signal power is fixed deterministically.

6. Method according to one of the preceding claims, **characterized in that** the receivers are in the form of hydrophones of a sonar.

7. Apparatus comprising an array formed from a plurality of receivers, the receivers being arranged at a predetermined sampling rate and a predetermined block size to detect an acoustic signal, and means for adaptively beamforming the signals received from the receivers by applying adaptive filter coefficients updating according to a predetermined adaptation rate, where the adaptation rate assigned to each receiver depends at least on the power of the signal detected by the respective receiver and the adaptation rate of those receivers whose detected signal has a signal power corresponding to the average signal power of the signals received by the receivers of the array or greater, has a higher frequency than the adaptation rate of those receivers whose detected signal has a lower signal power than the average signal power of the signals received by the receivers of the array.

8. Device according to Claim 7, **characterized in that** the adaptation rate of those receivers whose detected signal has a lower signal power than a predetermined signal power or does not have a predetermined frequency or a predetermined frequency range and which are arranged adjacent to a receiver with a higher adaptation rate at a predetermined distance, is lower than the adaptation rate of the receivers with a higher adaptation rate and higher than the adaptation rate of the remaining receivers.

9. Device according to one of Claims 7 and 8, **characterized in that** the adaptation rate of those receivers whose detected signal exceeds a predetermined signal power has a higher frequency than those receivers whose detected signal has a power below the predetermined signal power.

10. Device according to one of Claims 7 and 8, **characterized in that** the adaptation rate of those receivers whose detected signal has a predetermined frequency or a predetermined frequency range has a higher frequency than those receivers whose detected signal does not have the predetermined frequency or the predetermined frequency range.

11. Device according to one of Claims 7 to 10, **characterized in that** the device is a sonar and the receivers are hydrophones.

## Revendications

1. Procédé pour la formation de faisceau adaptative d'au moins un signal acoustique détecté au moyen d'un réseau formé d'une pluralité de récepteurs à un taux d'échantillonnage prédéterminé et une taille de bloc prédéterminée en utilisant des coefficients de filtrage adaptatifs se mettant à jour selon un taux d'adaptation prédéterminé, le taux d'adaptation de chaque récepteur dépendant d'au moins la puissance du signal détecté par le récepteur respectif, comportant les étapes suivantes:
- détermination de la puissance de signal moyenne du panorama de réception des signaux reçus par les récepteurs du réseau,
- utilisation d'un taux d'adaptation prédéterminé sur les zones partielles du panorama de réception dont le signal détecté présente une puissance de signal correspondant à la puissance de signal moyenne ou à une puissance de signal supérieure à celle-ci, le taux d'adaptation prédéterminé présentant une fréquence supérieure à celle du taux d'adaptation des zones partielles du panorama de réception dont le signal détecté présente une puissance de signal inférieure à la puissance de signal moyenne.

2. Procédé selon la revendication 1, **caractérisé en ce que** le taux d'adaptation des récepteurs, dont le signal détecté présente une puissance de signal inférieure à une puissance de signal prédéterminée ou ne présente pas une fréquence prédéterminée ou une plage de fréquences prédéterminée et lesquels sont disposés adjacents à une distance prédéterminée d'un récepteur comportant un taux d'adaptation supérieur, est inférieur au taux d'adaptation des récepteurs comportant un taux d'adaptation supérieur et supérieur au taux d'adaptation des récepteurs restants.

3. Procédé selon l'une des revendications précédentes, **caractérisé en ce que** le taux d'adaptation des récepteurs dont le signal détecté dépasse une puissance de signal prédéterminée présente une fréquence supérieure par rapport à celle des récepteurs dont le signal détecté présente une puissance inférieure à la puissance de signal prédéterminée.

4. Procédé selon l'une des revendications précédentes, **caractérisé en ce que** le taux d'adaptation des récepteurs dont le signal détecté présente une fréquence prédéterminée ou une plage de fréquences prédéterminée présente une fréquence supérieure par rapport à celle des récepteurs dont le signal détecté ne présente pas la fréquence prédéterminée ou la plage de fréquences prédéterminée.

5. Procédé selon l'une des revendications précédentes, **caractérisé en ce que** le taux d'adaptation d'un récepteur dont le signal détecté se situe en dessous d'une autre puissance de signal prédéterminée est fixé de manière déterministe.

6. Procédé selon l'une des revendications précédentes, **caractérisé en ce que** les récepteurs sont réalisés sous forme d'hydrophones d'un sonar.

7. Dispositif comportant un réseau formé d'une pluralité de récepteurs, les récepteurs étant configurés pour la détection d'un signal acoustique à un taux d'échantillonnage prédéterminé et une taille de bloc prédéterminée, et un appareil pour la formation de faisceau adaptative des signaux reçus par les récepteurs au moyen de l'utilisation de coefficients de filtrage adaptatifs se mettant à jour selon un taux d'adaptation prédéterminé, le taux d'adaptation associé à chaque récepteur dépendant au moins de la puissance du signal détecté par le récepteur respectif et le taux d'adaptation des récepteurs, dont le signal détecté présente une puissance de signal correspondant à la puissance de signal moyenne des signaux reçus par les récepteurs du réseau ou à une puissance de signal supérieure à celle-ci, présentant une fréquence supérieure à celle du taux d'adaptation des récepteurs dont le signal détecté présente une puissance de signal inférieure à la puissance de signal moyenne des signaux reçus par les récepteurs du réseau.

8. Dispositif selon la revendication 7, **caractérisé en ce que** le taux d'adaptation des récepteurs, dont le signal détecté présente une puissance de signal inférieure à une puissance de signal prédéterminée ou ne présente pas une fréquence prédéterminée ou une plage de fréquences prédéterminée et lesquels sont disposés adjacents à une distance prédéterminée d'un récepteur comportant un taux d'adaptation supérieur, est inférieur au taux d'adaptation des récepteurs comportant un taux d'adaptation supérieur et supérieur au taux d'adaptation des récepteurs restants.

9. Dispositif selon l'une des revendications 7 et 8, **caractérisé en ce que** le taux d'adaptation des récepteurs dont le signal détecté dépasse une puissance de signal prédéterminée présente une fréquence supérieure par rapport à celle des récepteurs dont le signal détecté présente une puissance inférieure à la puissance de signal prédéterminée.

10. Dispositif selon l'une des revendications 7 et 8, **caractérisé en ce que** le taux d'adaptation des récepteurs dont le signal détecté présente une fréquence prédéterminée ou une plage de fréquences prédéterminée présente une fréquence supérieure par rapport à celle des récepteurs dont le signal détecté ne présente pas la fréquence prédéterminée ou la plage de fréquences prédéterminée.

11. Dispositif selon l'une des revendications 7 à 10, **caractérisé en ce que** le dispositif est un sonar et les récepteurs sont des hydrophones.
